(19) Europäisches Patentamt
European Patent Office
Office européen des brevets

(11) **EP 2 017 652 B1**

(12) **FASCICULE DE BREVET EUROPEEN**

(45) Date de publication et mention de la délivrance du brevet:
**23.05.2018  Bulletin 2018/21**

(51) Int Cl.:
***G01V 3/10*** (2006.01)

(21) Numéro de dépôt: **08104613.8**

(22) Date de dépôt: **02.07.2008**

(54) **Détecteur de proximité inductif à bobinages commutés**

Induktiver Näherungsdetektor mit umschaltbaren Spulen

Inductive proximity detector with switched windings

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.07.2007  FR 0756650**

(43) Date de publication de la demande:
**21.01.2009  Bulletin 2009/04**

(73) Titulaire: **Schneider Electric Industries SAS 92500 Rueil-Malmaison (FR)**

(72) Inventeurs:
• **Bernard, Jacques**
  **16340, l'ISLE D'ESPAGNAC (FR)**
• **Emmanuel, Michel**
  **16380, CHAZELLES (FR)**

(74) Mandataire: **Dufresne, Thierry et al Schneider Electric Industries SAS Service Propriété Industrielle 35 rue Joseph Monier - CS 30323 92506 Rueil-Malmaison Cedex (FR)**

(56) Documents cités:
**DE-A1- 3 228 524     DE-A1- 4 330 140**

## Description

La présente invention se rapporte à un détecteur de proximité inductif permettant de détecter une cible métallique, quelle que soit la nature de cette cible (acier, inox, aluminium, laiton, ...).

Les détecteurs de proximité inductifs sont des capteurs sans contact bien connus qui permettent de détecter la présence d'une cible, comme un objet métallique, lorsque celle-ci est placée dans la zone de détection du détecteur. Ils fournissent soit un signal de sortie binaire indiquant la présence ou l'absence d'une cible, soit un signal de sortie analogique, en fonction de la distance de la cible par rapport au détecteur.

Il est connu du document US 5,624,733 un détecteur de proximité inductif permettant de détecter la présence d'une cible métallique. Ce détecteur comporte un circuit oscillateur dans lequel est placé une bobine de transmission et deux bobines de détection séparées par la bobine de transmission, connectées en série et enroulées en sens inverse de manière à produire une tension différentielle. Lorsqu'une cible métallique est amenée à la portée, la tension différentielle s'annule.

La configuration décrite dans ce document permet de détecter différents objets métalliques, quelle que soit leur nature (acier, inox, aluminium, laiton, ...). En revanche, ce détecteur présente une très grande sensibilité liée au positionnement de ses bobines.

Le but de l'invention est de proposer un détecteur de proximité inductif permettant de détecter de manière fiable au cours du temps la présence d'une cible métallique, quelle que soit sa nature (acier, inox, aluminium, laiton, ...). Le détecteur de l'invention est notamment moins sensible à un défaut de positionnement de ses bobines et n'est pas perturbé par les dérives en température pouvant influer sur le résultat de la détection.

Il est connu du document DE3228524 un détecteur de proximité inductif.

Ce but est atteint par un détecteur de proximité inductif comprenant :

- un circuit oscillant excité à résonance par un générateur et comprenant une bobine de détection sensible à une cible métallique à détecter,

- une bobine de référence agencée de manière à présenter une inductance mutuelle vis-à-vis de la cible métallique à détecter sensiblement plus faible que celle de la bobine de détection vis-à-vis de la cible métallique,

- des moyens de traitement connectés aux bobines permettant de déterminer la présence ou l'absence de la cible métallique à proximité du détecteur,

- le circuit oscillant comportant la bobine de référence, et

- le circuit oscillant comportant un commutateur apte à prendre deux positions pour connecter alternativement chaque bobine.

Selon un exemple non couvert par l'invention, les bobines sont fabriquées dans la même technologie et dérivent donc toutes les deux en température et dans le temps de manière équivalente. Selon un mode de réalisation de l'invention, le générateur et les moyens de traitement sont par exemple communs aux deux bobines et le circuit oscillant comporte un condensateur qui est également commun aux deux bobines.

Selon un mode de réalisation, les moyens de traitement comportent des moyens de détermination de la fréquence du signal mesuré lorsque le commutateur est dans chacune de ses positions.

Selon un autre mode de réalisation, les moyens de traitement retranchent une fréquence de référence à la fréquence mesurée.

Selon un autre mode de réalisation de l'invention, les moyens de traitement déterminent une différence de fréquence à partir des fréquences d'oscillation du circuit oscillant pour chaque position du commutateur et comparent la différence obtenue avec une valeur seuil obtenue lors d'un apprentissage pour déterminer la présence ou l'absence de la cible métallique à proximité du détecteur.

Selon un mode de réalisation de l'invention, la bobine de référence présente par exemple une configuration déterminée de manière à présenter une inductance mutuelle quasi-nulle vis-à-vis de la bobine de détection et de la cible métallique. Dans ce mode de réalisation, la bobine de référence présente par exemple une configuration en huit.

Selon un autre mode de réalisation de l'invention, la bobine de détection présente un enroulement annulaire.

Selon un autre de mode de réalisation, la bobine de détection et la bobine de référence sont positionnées de manière coaxiale.

Selon un autre mode de réalisation, le commutateur est un interrupteur électronique analogique.

D'autres caractéristiques et avantages vont apparaître dans la description détaillée qui suit en se référant à un mode de réalisation donné à titre d'exemple et représenté par les dessins annexés sur lesquels :

- la figure 1 illustre le principe employé dans l'invention,
- la figure 2 représente le schéma de principe du détecteur de l'invention,
- la figure 3 représente les deux bobines employées dans le détecteur de l'invention.

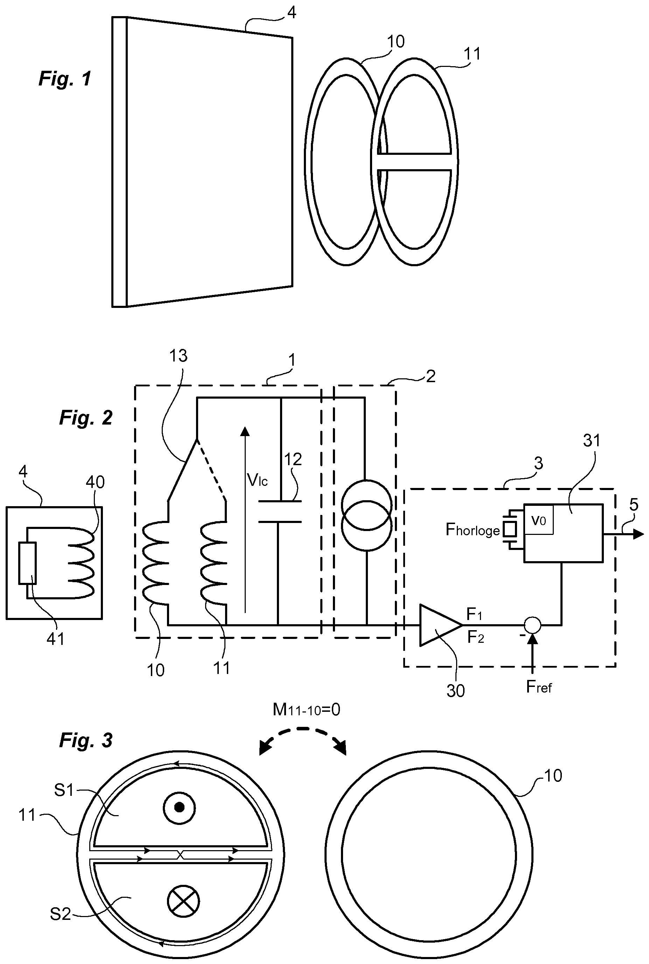

Le détecteur de l'invention comporte un circuit oscillant 1 de type LC parallèle excité à résonance par exemple par un générateur de courant 2 apte à envoyer au circuit oscillant 1 un courant dont la fréquence doit s'accorder à la fréquence de résonance du circuit oscillant 1 et des moyens de traitement 3 permettant de fournir un signal de sortie binaire indiquant la présence ou l'absence d'une cible 4 métallique à proximité du détecteur. Sur la figure 2, la cible 4 est représentée sous la forme d'un circuit comportant une bobine 40 et une résistance 41.

Le circuit oscillant 1 du détecteur comporte deux bobines 10, 11 et un condensateur 12 commun pour les deux bobines ayant une capacité déterminée et montée en parallèle des deux bobines 10, 11. Les deux bobines sont fabriquées à partir de la même technologie et sont par exemple placées de manière coaxiale.

Une première bobine est une bobine de détection 10 qui est sensible à la proximité d'une cible métallique 4 lorsqu'elle est connectée au circuit oscillant 1. Une seconde bobine est une bobine de référence 11 qui est faiblement sensible à la proximité de la cible 4. Autrement dit, la bobine de référence 11 est agencée pour présenter une inductance mutuelle M sensiblement plus faible vis-à-vis de la cible 4 à détecter que celle de la bobine de détection vis-à-vis de cette même cible 4.

En référence à la figure 1, la bobine de détection 10 présente par exemple un enroulement classique de forme annulaire ou carrée pour maximiser le coefficient de couplage magnétique avec la cible 4 lorsque la cible 4 se situe à la portée du détecteur. D'autres formes peuvent être envisagées, tenant compte par exemple de la forme du boîtier du détecteur.

Pour être faiblement sensible à la cible métallique lorsqu'elle est connectée, la bobine de référence 11 peut être positionnée de manière déterminée dans le détecteur par rapport à la bobine de détection 10. La bobine de référence 11 est ainsi par exemple placée à l'arrière de la bobine de détection de manière à minimiser le couplage avec la cible lorsque celle-ci est à la portée du détecteur (figure 1). Dans cette configuration, la bobine de référence 11 peut prendre également une forme annulaire ou carrée et être identique à la bobine de détection 10. Cette configuration est particulièrement adaptée pour des détecteurs non noyables.

En variante, la bobine de référence 11 peut être construite de manière à présenter intrinsèquement une mutuelle quasi-nulle ($M_{11-10}$) à la fois vis-à-vis de la cible 4 mais aussi vis-à-vis de la bobine de détection 10. Pour cela, la bobine de référence 11 peut comporter par exemple deux enroulements reliés en série, bobinés en sens inverse et de sections S1 et S2 égales de manière à pouvoir former deux champs magnétiques de sens opposés lorsqu'elle est connectée (figure 3). En référence à la figure 3, la bobine de référence 11 présente par exemple une configuration en huit. D'autres configurations sont bien entendu envisageables pourvu que le flux résultant généré à travers cette bobine soit nul ou quasi nul lorsqu'elle est connectée en présence de la cible 4 et de la bobine de détection 10. L'emploi d'une bobine de référence 11 ayant une configuration intrinsèque déterminée telle que décrite ci-dessus sera particulièrement appréciée dans le cas où le détecteur est noyé. Bien entendu, pour minimiser au maximum le couplage entre la cible et la bobine de référence, la bobine de référence 11 ayant cette forme particulière peut également être placée à l'arrière de la bobine de détection 10 comme représentée en figure 1.

Selon l'invention, le détecteur pourrait comporter en outre des moyens de traitement 3 permettant de détecter la présence ou l'absence d'une cible 4 métallique à proximité du détecteur. Les moyens de traitement 3 fournissent par exemple un signal de sortie 5 qui peut être par exemple un signal binaire indiquant la présence ou l'absence d'une cible 4 à proximité du détecteur. Les moyens de traitement comportent un étage de détection 30 chargé par exemple d'amplifier et de mettre en forme le signal de détection reçu du circuit oscillant 1 et une unité de traitement 31 pour analyser le signal reçu et décider de l'état de la détection. Ces moyens de traitement 3 sont communs aux deux bobines 10, 11.

Selon l'invention, le circuit oscillant pourrait comporter un commutateur 13 permettant de connecter alternativement la bobine de détection 10 et la bobine de référence 11 en parallèle sur le condensateur 12. Ce type de commutateur 13 est par exemple un interrupteur électronique analogique. Le commutateur 13 est piloté par un ordre de commutation provenant par exemple des moyens de traitement 3. Il permet donc de commuter la fréquence d'oscillation du détecteur entre deux valeurs en fonction des valeurs des inductances des deux bobines 10, 11 selon la formule :

$$F = 1/2\pi\sqrt{LC}$$

Selon l'invention, à partir de la tension d'oscillation $V_{LC}$ mesurée, les moyens de traitement 3 pourraient déterminer donc alternativement les fréquences d'oscillation $F_1$ et $F_2$ selon la position du commutateur. Pour chaque mesure, les moyens de traitement 3 retranchent une fréquence de référence $F_{REF}$ fixe afin d'améliorer le ratio précision/temps de mesure. En effet, le temps d'acquisition nécessaire à la mesure d'une fréquence F est donné par la relation suivante :

$$t_{acq} = \frac{F}{dF \times F_{hor\log e}}$$

dans laquelle F représente la fréquence mesurée, dF la résolution sur la fréquence mesurée et $F_{horloge}$ la fréquence de comptage. Pour réduire le temps d'acquisition $t_{acq}$ une possibilité peu coûteuse consiste donc à réduire la fréquence à mesurer F en lui retranchant une fréquence de référence $F_{REF}$.

L'unité de traitement 31 détermine donc à la fois $F_1$-$F_{REF}$ et $F_2$-$F_{REF}$ puis calcule la différence entre ces deux expressions. A l'aide d'un comparateur, la différence calculée est ensuite comparée à une valeur seuil $v_0$ mémorisée pour décider de la présence ou de l'absence d'une cible 4 métallique à proximité du détecteur. La valeur seuil $v_0$ est obtenue lors d'une étape préalable d'apprentissage et mémorisée dans des moyens de mémorisation de l'unité de traitement 31 du détecteur. L'étape d'apprentissage est réalisée en positionnant la cible métallique à la portée et en mémorisant la différence $v_0$ entre les fréquences $F_1$ et $F_2$ ainsi mesurées.

Une fois l'apprentissage achevé, l'unité de traitement 31 compare en permanence la différence $F_1$-$F_2$ au seuil $v_0$ et génère en conséquence un signal de sortie 5 représentatif de la présence ou de l'absence d'une cible 4 métallique à proximité du détecteur.

Il est bien entendu que l'on peut, sans sortir du cadre de l'invention, imaginer d'autres variantes et perfectionnements de détail et de même envisager l'emploi de moyens équivalents.

## Revendications

1. Détecteur de proximité inductif comprenant :

   - un circuit oscillant (1) excité à résonance par un générateur (2) et comprenant une bobine de détection (10) sensible à une cible (4) métallique à détecter,
   - une bobine de référence (11) agencée de manière à présenter une inductance mutuelle vis-à-vis de la cible (4) métallique à détecter sensiblement plus faible que celle de la bobine de détection (10) vis-à-vis de la cible (4) métallique,
   - des moyens de traitement (3) connectés aux bobines (10, 11) permettant de déterminer la présence ou l'absence de la cible (4) métallique à proximité du détecteur, **caractérisé en ce que** :
   - le circuit oscillant comporte la bobine de référence (11),
   - le circuit oscillant (1) comporte un commutateur (13) apte à prendre deux positions pour connecter alternativement chaque bobine (10, 11).

2. Détecteur selon la revendication 1, **caractérisé en ce que** les moyens de traitement (3) sont communs aux deux bobines (10, 11).

3. Détecteur selon la revendication 1 ou 2, **caractérisé en ce que** le circuit oscillant comporte un condensateur (12) commun aux deux bobines (10, 11).

4. Détecteur selon l'une des revendications 1 à 3, **caractérisé en ce que** le générateur (2) est commun aux deux bobines (10, 11).

5. Détecteur selon l'une des revendications 1 à 4, **caractérisé en ce que** les moyens de traitement comportent des moyens de détermination de la fréquence du signal mesuré lorsque le commutateur (13) est dans chacune de ses positions.

6. Détecteur selon la revendication 5, **caractérisé en ce que** les moyens de traitement (3) sont adaptés pour retrancher une fréquence de référence ($F_{ref}$) à la fréquence mesurée ($F_1$, $F_2$).

7. Détecteur selon l'une des revendications 1 à 6, **caractérisé en ce que** les moyens de traitement (3) sont adaptés pour déterminer une différence de fréquence à partir des fréquences d'oscillation ($F_1$, $F_2$) du circuit oscillant pour chaque position du commutateur (13) et pour comparer la différence obtenue avec une valeur seuil ($v_0$) obtenue lors d'un apprentissage pour déterminer la présence ou l'absence de la cible (4) métallique à proximité du détecteur.

8. Détecteur selon l'une des revendications 1 à 7, **caractérisé en ce que** la bobine de référence (11) présente une configuration déterminée de manière à présenter une inductance mutuelle quasi-nulle vis-à-vis de la bobine de détection (10) et de la cible métallique (4).

9. Détecteur selon la revendication 8, **caractérisé en ce que** la bobine de référence (11) présente une configuration en huit.

10. Détecteur selon l'une des revendications 1 à 9, **caractérisé en ce que** la bobine de détection (10) présente un enroulement annulaire.

11. Détecteur selon l'une des revendications 1 à 10, **caractérisé en ce que** la bobine de détection (10) et la bobine de référence (11) sont positionnées de manière coaxiale.

12. Détecteur selon l'une des revendications 1 à 11, **caractérisé en ce que** le commutateur (13) est un interrupteur électronique analogique.

## Patentansprüche

1. Induktiver Näherungsdetektor, umfassend:

   - einen Schwingkreis (1), der durch einen Generator (2) resonant angeregt wird und eine Detektionsspule (10) umfasst, die auf ein zu detektierendes metallisches Ziel (4) anspricht,
   - eine Referenzspule (11), die derart ausgebildet ist, dass sie eine gegenseitige Induktivität gegenüber dem zu detektierenden metallischen Ziel (4) aufweist, die wesentlich geringer ist als jene der Detektionsspule (10) gegenüber dem metallischen Ziel (4),

- mit den Spulen (10, 11) verbundene Verarbeitungsmittel (3), die es ermöglichen, die Gegenwart oder Abwesenheit des metallischen Ziels (4) in der Nähe des Detektors zu bestimmen, **dadurch gekennzeichnet, dass**:
- der Schwingkreis die Referenzspule (11) beinhaltet,
- der Schwingkreis (1) einen Wahlschalter (13) beinhaltet, der imstande ist, zwei Positionen einzunehmen, um alternierend jede Spule (10, 11) anzuschließen.

2. Detektor nach Anspruch 1, **dadurch gekennzeichnet, dass** die Verarbeitungsmittel (3) den beiden Spulen (10, 11) gemeinsam sind.

3. Detektor nach Anspruch 1 oder 2, **dadurch gekennzeichnet, dass** der Schwingkreis einen Kondensator (12) beinhaltet, der den beiden Spulen (10, 11) gemeinsam ist.

4. Detektor nach einem der Ansprüche 1 bis 3, **dadurch gekennzeichnet, dass** der Generator (2) den beiden Spulen (10, 11) gemeinsam ist.

5. Detektor nach einem der Ansprüche 1 bis 4, **dadurch gekennzeichnet, dass** die Verarbeitungsmittel Mittel zum Bestimmen der Frequenz des Signals beinhalten, das gemessen wird, wenn sich der Wahlschalter (13) in jeder seiner Positionen befindet.

6. Detektor nach Anspruch 5, **dadurch gekennzeichnet, dass** die Verarbeitungsmittel (3) dafür geeignet sind, eine Referenzfrequenz ($F_{ref}$) von der gemessenen Frequenz ($F_1$, $F_2$) abzuziehen.

7. Detektor nach einem der Ansprüche 1 bis 6, **dadurch gekennzeichnet, dass** die Verarbeitungsmittel (3) dafür geeignet sind, eine Frequenzdifferenz ausgehend von den Schwingungsfrequenzen ($F_1$, $F_2$) des Schwingkreises für jede Position des Wahlschalters (13) zu bestimmen und die erhaltene Differenz mit einem Schwellenwert ($v_0$) zu vergleichen, der aus einem Lernvorgang erhalten wird, um die Gegenwart oder Abwesenheit des metallischen Ziels (4) in der Nähe des Detektors zu bestimmen.

8. Detektor nach einem der Ansprüche 1 bis 7, **dadurch gekennzeichnet, dass** die Referenzspule (11) eine Konfiguration aufweist, die derart bestimmt ist, dass sie eine gegenseitige Induktivität von quasi null gegenüber der Detektionsspule (10) und dem metallischen Ziel (4) aufweist.

9. Detektor nach Anspruch 8, **dadurch gekennzeichnet, dass** die Referenzspule (11) eine Achterkonfiguration aufweist.

10. Detektor nach einem der Ansprüche 1 bis 9, **dadurch gekennzeichnet, dass** die Detektionsspule (10) eine ringförmige Wicklung aufweist.

11. Detektor nach einem der Ansprüche 1 bis 10, **dadurch gekennzeichnet, dass** die Detektionsspule (10) und die Referenzspule (11) auf koaxiale Weise positioniert sind.

12. Detektor nach einem der Ansprüche 1 bis 11, **dadurch gekennzeichnet, dass** der Wahlschalter (13) ein analoger elektronischer Schalter ist.

**Claims**

1. Inductive proximity detector comprising:

   - an oscillating circuit (1) excited with resonance by a generator (2) and comprising a detection coil (10) sensitive to a metal target (4) to be detected,
   - a reference coil (11) arranged to present a mutual inductance with respect to the metal target (4) to be detected that is substantially lower than that of the detection coil (10) with respect to the metal target (4),
   - processing means (3) connected to the coils (10, 11) making it possible to determine the presence or absence of the metal target (4) close to the detector, **characterized in that**:
   - the oscillating circuit comprises the reference coil (11),
   - the oscillating circuit (1) comprises a switch (13) able to assume two positions to connect each coil (10, 11) alternately.

2. Detector according to Claim 1, **characterized in that** the processing means (3) are common to both coils (10, 11).

3. Detector according to Claim 1 or 2, **characterized in that** the oscillating circuit comprises a capacitor (12) common to both coils (10, 11).

4. Detector according to one of Claims 1 to 3, **characterized in that** the generator (2) is common to both coils (10, 11).

5. Detector according to one of Claims 1 to 4, **characterized in that** the processing means comprise means of determining the frequency of the signal measured when the switch (13) is in each of its positions.

6. Detector according to Claim 5, **characterized in that** the processing means (3) are adapted to subtract a reference frequency ($F_{ref}$) from the measured fre-

quency ($F_1$, $F_2$).

7. Detector according to one of Claims 1 to 6, **characterized in that** the processing means (3) are adapted to determine a frequency difference from oscillation frequencies ($F_1$, $F_2$) of the oscillating circuit for each position of the switch (13) and to compare the difference obtained with a threshold value ($v_0$) obtained from learning to determine the presence or absence of the metal target (4) close to the detector.

8. Detector according to one of Claims 1 to 7, **characterized in that** the reference coil (11) has a configuration that is determined so as to present an almost zero mutual inductance with respect to the detection coil (10) and the metal target (4).

9. Detector according to Claim 8, **characterized in that** the reference coil (11) has an eight configuration.

10. Detector according to one of Claims 1 to 9, **characterized in that** the detection coil (10) has an annular winding.

11. Detector according to one of Claims 1 to 10, **characterized in that** the detection coil (10) and the reference coil (11) are positioned coaxially.

12. Detector according to one of Claims 1 to 11, **characterized in that** the switch (13) is an analogue electronic switch.

**Fig. 1**

**Fig. 2**

$V_{lc}$

$F_{horloge}$

$V0$

$F_1$

$F_2$

$F_{ref}$

$M_{11-10}=0$

**Fig. 3**

S1

S2

10

7

**EP 2 017 652 B1**

**RÉFÉRENCES CITÉES DANS LA DESCRIPTION**

**Documents brevets cités dans la description**

- US 5624733 A
- DE 3228524